# EUROPEAN PATENT SPECIFICATION

(11) **EP 2 559 995 B1**
(45) Date of publication and mention of the grant of the patent: **31.07.2013**
(21) Application number: 11006835.0
(22) Date of filing: 19.08.2011
(51) Int. Cl.: G01N 25/72

(54) **System and method for detecting structural defects within a stent**
System und Verfahren zum Erkennen von Strukturdefekten in einem Stent
Système et procédé de détection des défauts structurels dans une endoprothèse

(43) Date of publication of application: 20.02.2013
(73) Proprietor: Abbott Laboratories Vascular Enterprises Limited, Dublin 2 (IE)
(72) Inventor: Diedrichs, Christoph, 76275 Ettlinger (DE); Stockert, Gunther, 72076 Tübingen (DE)
(74) Representative: Peters, Hajo

(56) References cited:
- US-A1- 2006 235 505
- US-A1- 2008 312 747
- US-B1- 6 595 684
- O. STROHM ET AL: "Safety of implantable coronary stents during 1H-magnetic resonance imaging at 1.0 and 1.5 T", JOURNAL OF CARDIOVASCULAR MAGNETIC RESONANCE, vol. 1, no. 3, 31 December 1999 (1999-12-31), pages 239-245, XP055058439, ISSN: 1097-6647

## Description

The invention relates to a system and method for detecting defects of struts forming a stent.

### Background of the invention

In medicine, a natural conduit in a body may be locally flow constricted due to disease. During surgeries, a stent may be inserted into this natural conduit, in order to prevent or counteract such a flow constriction. A stent is an artificial tube-like device having meshed walls, the dimension of the stent, in particular the diameter, being expandable once it is positioned in the natural conduit appropriately, e.g. the local restriction. In the expanded shape, the stent holds the natural conduit open to allow the flow of body fluids or the access for surgery.

In the manufacturing of stents, it has to be ensured that the struts forming the meshed walls of the stent are free of defects, such as broken areas or cracks. Inspecting the stents visually is very difficult because these defects might be hard to detect. In particular, when both opposite ends of a cracked strut are facing each other in a way that there is no visible gap in between both ends, the defect might remain undetected.

Such a visual inspection system is for example disclosed in US 2008/0312747 A1 which is directed to the inspection of cylinders, such as stents, by utilization of a camera. The camera produces an image of the cylinder as a roller assembly rotates the cylinder about its longitudinal axis. The recorded optical image is compared with a pre-stored background image, in order to determine deviations.

US 6,595,684 B1 discloses a system for evaluating a meshed structure. A thermal line is embedded into the structure for generating a predetermined amount of heat, which heats the structure. The system further includes an infrared detection device that is operable to determine the temperature at various points of the structure. The output of the infrared detection device is compared to a baseline thermal signature of the structure to determine anomalies in the structure.

Strohm et al. , Journal of Cardiovascular Magnetic Resonance 1(1999) 239 discloses as well imaging stent using an infrared camera in order to detect heating when the stent is imaged using magnetic resonance.

### Summary of the invention

It is an object of the present invention to provide a system and method for facilitating an inspection of product quality in the manufacturing of stents.

This object is solved with a system and method according to the independent claims. Advantageous further developments are subject of the dependent claims.

According to an embodiment of the invention, a system for detecting defects within a structure of struts forming a stent is provided. The system comprises, a power supply for applying an electrical potential to a proximal end and to a distal end of said stent in order to establish an electrical current flow between said proximal end and said distal end, and a temperature sensor, adjacent to said stent for detecting a defect within said structure of struts, said temperature sensor being adapted to measure a temperature profile of said stent. Due to the application of an electrical potential, defective (fully or partly broken) struts are generating heat in a different extent than intact struts, because of the differing electrical resistance of the defects. This enables to reliably and easily detect defects which are not or hardly visible.

According to another embodiment, said temperature sensor is an infrared camera. This has the advantage that a temperature profile of the entire side facing the infrared camera can be acquired in a single step, resulting in a faster overall inspection.

Advantageously, the system may further comprise a clamping tool for holding the stent. This further facilitates the inspection by providing the stent to be inspected in a known predetermined position.

This clamping tool may advantageously provide at both sides of said clamping tool a connector for said electrical power supply. This provides an easy assembly of the system.

According to a yet further embodiment of the invention, said clamping tool comprises a drive mechanism for rotating said stent. This way, the stent can be inspected easily from all sides.

According to another embodiment of the invention, the system further comprises a loader for automatically loading said stent into said clamping tool adapted for an automatic operation of said system. This allows operating the system in a fully automated manner which is advantageous in mass production.

Advantageously, said temperature sensor is mounted to a mounting fixture adapted to rotate around the stent. This has the same advantages as the rotation of the stent mentioned above.

According to another embodiment of the invention, said struts are made of biocompatible materials ensuring a good medical compatibility.

Advantageously, this biocompatible material is nitinol.

Further, the system may be constructed such that said applied electrical potential is a D.C. voltage.

The above mentioned advantages can also be achieved according to an embodiment of the invention providing a method of detecting defects within a structure of struts forming a stent, said method comprising establishing an electrical current flow between a proximal end and a distal end of said stent by applying an electrical potential to said proximal end and said distal end of said stent; measuring a temperature of the stent with a temperature sensor, and detecting said defect within said structure of struts by locating a spot within said structure of struts dissipating a differing temperature compared to an adjacent area within said structure of struts.

These and other embodiments are described in more detail with reference to the Figures.

### Brief description of the Figures

Fig. 1 schematically shows a system for detecting defects of struts forming a stent according to an embodiment of the invention, and
Fig. 2 shows the detection of structural defects within the stent by means of the system of Fig. 1.

### Detailed description of the invention

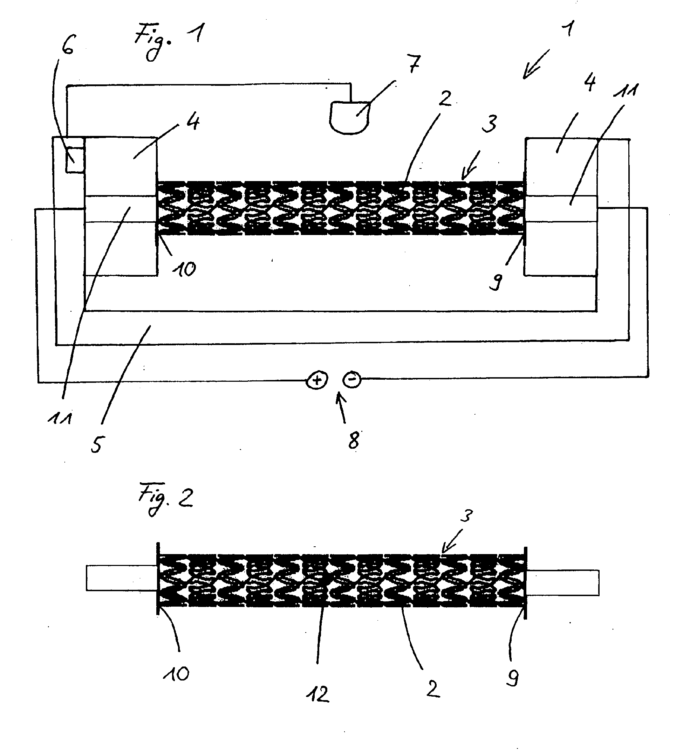

Fig. 1 schematically shows a system 1 for detecting defects of struts 2 forming a stent 3 according to an embodiment of the invention. The system 1 is adapted to hold a stent 3 by means of clamping tools 4. The stent 3 is a tubular expandable medical device, the walls of which are formed by struts 2 forming a metal mesh. The material used for forming the metal mesh is preferably biocompatible material, such as nitinol. The clamping tools 4 are mounted to a mounting fixture 5 in a rotatable manner drivable by a drive mechanism 6 and are adapted to hold the stent 3 in its expanded or unexpanded state. Further, a temperature sensor 7, which is preferably an infrared camera, is attached to the mounting fixture 5. The temperature sensor 7 can be attached in a stationery manner relative to the mounting fixture 5, or can be movable relative thereto. In case it is moveable, a moving device (not shown) can be provided between the temperature sensor 7 and the mounting fixture 5 in form of a rotation device positioned coaxial to the stent and adapted to rotate the temperature sensor 7 around the stent 3 and/or a rail or telescopically moveable holding arm for transversally moving the temperature sensor 7 along a longitudinal direction of the stent 3.

Further, an electric power supply 8 is provided for supplying electrical power, preferably D.C. power, to a proximal end 9 and a distal end 10 of the stent. The power supply 8 is connectable with a connector 11 at each end 9, 10 which establishes the electrical connection to the respective end 9, 10 of the stent 3.

In operation of the system 1, the stent 3 is clamped and held by the clamping tool 4. Then, an electrical current is established between a proximal end 9 and a distal end 10 of the stent 3 by applying an electrical potential by means of the power supply 8. This current flow through the stent 3, or through the struts 2 of the stent 3, generates heat. At cracked struts, the electrical resistance is higher than at non-defective struts leading to more heat at the cracked struts. In case a strut is fully cracked such that the ends do not have contact at all anymore, the current through the remaining struts within the same cross-section of the stent 3 is higher which also causes an increased temperature which is lower than the temperature at the cracked struts the ends of which still contact each other. In order to inspect the stent 3, the temperature profile of the stent 3 is recorded by the temperature sensor 7. In order to do so, the temperature sensor 7 (preferably the infrared camera) and/or the stent 3 are moved relative to each other while the temperature sensor 7 measures the temperature of the stent 3 until the entire surface of the stent 3 is scanned by the temperature sensor 7. Having acquired the temperature profile of the surface of the stent 3, defects 12, i.e. defective struts, can be identified by dissipating a differing temperature compared to an adjacent area within said structure of struts. For example, a higher temperature may indicate a cracked strut, the ends of which are still in contact, whereas a lower temperature at a spot where a strut is supposed to be located may indicate a fully broken strut the ends of which are not contacting each other anymore.

In order to realize a good performance in mass production, a (not shown) loader can be provided for automatically taking the stents 3 to be inspected from a stack, a box or a conveying device, for placing the stent 3 into the clamping tools 4 and for removing the inspected stent 3 from the clamping device after testing. Also, a CPU may be provided for controlling the interaction of the drive mechanism 6, the clamping tool 4, the power supply 8, the temperature sensor 7 and the loader. Depending on the outcome of the testing, namely depending on the stent 3 having defects or not, the CPU may control the loader such that it removes the stent 3 from the clamping tool 4 and places the non-defective stents 3 separately from the defective ones.

## Claims

1. System (1) for detecting defects (12) within a structure of struts (2) forming a stent (3), comprising
a power supply (8) for applying an electrical potential to a proximal end (9) and to a distal end (10) of said stent (3) in order to establish an electrical current flow between said proximal end (9) and said distal end (10), and
a temperature sensor (7), adjacent to said stent (3) for detecting a defect (12) within said structure of struts (2), said temperature sensor (7) being adapted to measure a temperature profile of said stent (3).

2. System (1) according to claim 1, wherein said temperature sensor (7) is an infrared camera.

3. System (1) according to anyone of the preceding claims, further comprising a clamping tool (4) for holding the stent (3) .

4. System (1) according to claim 3, wherein said clamping tool (4) provides at both sides of said clamping tool (4) a connector (11) for said electrical power supply (8).

5. System (1) according to claim 3 or claim 4, wherein said clamping tool (4) comprises a drive mechanism (6) for rotating said stent (3).

6. System (1) according to anyone of claims 3 to 5, further comprising a loader for automatically loading said stent (3) into said clamping tool (4) adapted for an automatic operation of said system (1).

7. System (1) according to anyone of the preceding claims, wherein said temperature sensor (7) is mounted to a mounting fixture (5) adapted to rotate the temperature senor (7) around the stent (3).

8. System (1) according to anyone of the preceding claims, wherein said struts (2) are made of biocompatible materials.

9. System (1) according to anyone of the preceding claims, wherein said biocompatible material is nitinol.

10. System (1) according to anyone of the preceding claims, wherein said applied electrical potential is a D.C. voltage.

11. Method of detecting defects (12) within a structure of struts (2) forming a stent (3), said method comprising
establishing an electrical current flow between a proximal end (9) and a distal end (10) of said stent (3) by applying an electrical potential to said proximal end (9) and said distal end (10) of said stent (3);
measuring a temperature of the stent (3) with a temperature sensor (7), and
detecting said defect (12) within said structure of struts (2) by locating a spot within said structure of struts (2) dissipating a differing temperature compared to an adjacent area within said structure of struts (2).

12. Method according to claim 11, wherein said temperature sensor (7) is an infrared camera.

13. Method according to claim 11 or 12, wherein the temperature sensor (7) and the stent (3) are rotated relative to each other.

## Patentansprüche

1. System (1) zum Detektieren von Defekten (12) in einer Strebenstruktur (2), die einen Stent (3) ausbildet, mit
einer Spannungsversorgung (8) zum Anlegen eines elektrischen Potenzials an ein proximales Ende (9) und an ein distales Ende (10) des Stents (3), um einen elektrischen Stromfluss zwischen dem proximalen Ende (9) und dem distalen Ende (10) einzustellen, und einem Temperatursensor (7), der an dem Stent (3) anliegt, zum Detektieren eines Defekts (12) innerhalb der Strebenstruktur (2), wobei der Temperatursensor (7) geeignet ist, ein Temperaturprofil des Stents (3) zu messen.

2. System (1) nach Anspruch 1, wobei der Temperatursensor (7) eine Infrarotkamera ist.

3. System (1) nach einem der vorhergehenden Ansprüche, ferner umfassend ein Klammerwerkzeug (4) zum Halten des Stents (3).

4. System (1) nach Anspruch 3, wobei das Klammerwerkzeug (4) an beiden Seiten des Klammerwerkzeugs (4) einen Anschluss (11) für die elektrische Spannungsversorgung (8) bereitstellt.

5. System (1) nach Anspruch 3 oder Anspruch 4, wobei das Klammerwerkzeug (4) einen Antriebsmechanismus (6) zum Drehen des Stents (3) umfasst.

6. System (1) nach einem der Ansprüche 3 bis 5, ferner umfassend eine Zuführungseinrichtung zum automatischen Zuführen des Stents (3) in das Klammerwerkzeug (4), die für einen automatischen Betrieb des Systems (1) geeignet ist.

7. System (1) nach einem der vorhergehenden Ansprüche, wobei der Temperatursensor (7) auf einer Befestigungsvorrichtung (5) befestigt ist, die zum Drehen des Temperatursensors (7) um den Stent (3) herum in der Lage ist.

8. System (1) nach einem der vorhergehenden Ansprüche, wobei die Streben (2) aus biokompatiblen Materialien hergestellt sind.

9. System (1) nach einem der vorhergehenden Ansprüche, wobei das biokompatible Material Nitinol ist.

10. System (1) nach einem der vorhergehenden Ansprüche, wobei das angelegte elektrische Potenzial eine Gleichspannung ist.

11. Verfahren zum Detektieren von Defekten (12) in einer Strebenstruktur (2), die einen Stent (3) ausbildet, umfassend
Herstellen eines elektrischen Stromflusses zwischen einem proximalen Ende (9) und einem distalen Ende (10) des Stents (3) durch Anlegen eines elektrischen Potenzials an das proximale Ende (9) und das distale Ende (10) des Stents (3),
Messen einer Temperatur des Stents (3) mit einem Temperatursensor (7), und
Detektieren des Defekts (12) innerhalb der Strebenstruktur (2) durch Lokalisieren einer Stelle innerhalb der Strebenstruktur (2), die eine Temperatur ableitet, die sich von einem angrenzenden Bereich innerhalb der Strebenstruktur (2) unterscheidet.

12. Verfahren nach Anspruch 11, wobei der Temperatursensor (7) eine Infrarotkamera ist.

13. Verfahren nach Anspruch 11 oder 12, wobei der Temperatursensor (7) und der Stent (3) mit Bezug aufeinander gedreht werden.

## Revendications

1. Système (1) pour détecter des défauts (12) à l'intérieur d'une structure d'armatures (2) constituant une endoprothèse (3), comprenant :
une alimentation électrique (8) pour appliquer un potentiel électrique à une extrémité proximale (9) et à une extrémité distale (10) de ladite endoprothèse (3) afin d'établir un flux de courant électrique entre ladite extrémité proximale (9) et ladite extrémité distale (10), et
un capteur de température (7), adjacent à ladite endoprothèse (3) pour détecter un défaut (12) à l'intérieur de ladite structure d'armatures (2), ledit capteur de température (7) étant apte à mesurer un profil de température de ladite endoprothèse (3).

2. Système (1) selon la revendication 1, dans lequel ledit capteur de température (7) est une caméra infrarouge.

3. Système (1) selon l'une quelconque des revendications précédentes, comprenant en outre un outil de fixation (4) pour maintenir l'endoprothèse (3).

4. Système (1) selon la revendication 3, dans lequel ledit outil de fixation (4) fournit des deux côtés dudit outil de fixation (4) un connecteur (11) pour ladite alimentation électrique (8).

5. Système (1) selon la revendication 3 ou 4, dans lequel ledit outil de fixation (4) comprend un mécanisme d'entraînement (6) pour faire tourner ladite endoprothèse (3).

6. Système (1) selon l'une quelconque des revendications 3 à 5, comprenant en outre un chargeur pour charger automatiquement ladite endoprothèse (3) dans ledit outil de fixation (4) adapté à un fonctionnement automatique dudit système (1).

7. Système (1) selon l'une quelconque des revendications précédentes, dans lequel ledit capteur de température (7) est monté sur un dispositif de montage (5) apte à faire tourner le capteur de température (7) autour de l'endoprothèse (3).

8. Système (1) selon selon l'une quelconque des revendications précédentes, dans lequel lesdites armatures (2) sont constituées de matériaux biocompatibles.

9. Système (1) selon selon l'une quelconque des revendications précédentes, dans lequel ledit matériau biocompatible est du nitinol.

10. Système (1) selon selon l'une quelconque des revendications précédentes, dans lequel ledit potentiel électrique appliqué est une tension de courant continu.

11. Procédé pour détecter des défauts (12) à l'intérieur d'une structure d'armatures (2) constituant une endoprothèse (3), ledit procédé comprenant :
l'établissement d'un flux de courant électrique entre une extrémité proximale (9) et une extrémité distale (10) de ladite endoprothèse (3) afin d'appliquer un potentiel électrique à ladite extrémité proximale (9) et à ladite extrémité distale (10) de ladite endoprothèse (3) ;
la mesure d'une température de l'endoprothèse (3) avec un capteur de température (7) ; et
la détection dudit défaut (12) à l'intérieur de ladite structure d'armatures (2) en localisant une région à l'intérieur de ladite structure d'armatures (2) qui dissipe une température différente de celle d'une région adjacente à l'intérieur de ladite structure d' armatures (2).

12. Procédé selon la revendication 11, dans lequel ledit capteur de température (7) est une caméra infrarouge.

13. Procédé selon la revendication 11 ou 12, dans lequel le capteur de température (7) et l'endoprothèse (3) tournent l'un par rapport à l'autre.
